# EUROPEAN PATENT APPLICATION

(11) **EP 4 496 144 A1**
(43) Date of publication of application: **22.01.2025**
(21) Application number: 23769759.4
(22) Date of filing: 14.03.2023
(51) Int. Cl.: H01R 31/06, H01R 13/6581, H01R 43/16, B60L 53/16

(54) **CONNECTOR ASSEMBLY AND PROCESSING METHOD**

(30) Priority: 14.03.2022 CN 202210250037
(71) Applicant: Jilin Zhong Ying High Technology Co., Ltd., Jilin 130028 (CN)
(72) Inventor: WANG, Chao, Changchun, Jilin 130028 (CN)
(74) Representative: Habermann, Hruschka & Schnabel
(86) International application number: PCT/CN2023/081319
(87) International publication number: WO 2023/174257

(57) **Abstract**

The disclosure discloses a connector assembly and a processing method, the connector assembly comprising an electrical connection skeleton and a connector connected to two ends of the electrical connection skeleton, wherein the connector includes a connection terminal, an outer shell and an inner shell which is arranged within the outer shell and has a shielding effect, two ends of the electrical connection skeleton are electrically connected to the connection terminal respectively, outer periphery of the electrical connection skeleton is covered with an insulation layer and a shielding layer from the inside to the outside, the shielding layer is electrically connected to the inner shell, material of the inner shell contains a conductive plastic, the outer shell and the inner shell are fixed on part of the connection terminal and part of the electrical connection skeleton by an integrated molding process. In the present disclosure, an electrical connection skeleton is used to replace a multi-core copper cable, which reduces diameter of the cable, reduces weight of the cable, facilitates installation of the cable, reduces the friction with the vehicle shell, and extends the service life of the connector. The outer shell and the inner shell are fixed on part of the connection terminal and part of the electrical connection skeleton by an integrated molding process. The processing is convenient, the product weight is reduced, and the waterproof sealing effect of the connector can be guaranteed, and the production cost of the connector is reduced.

## Description

The present disclosure claims priority of the Chinese patent application with the application number 2022102500374, filed on March 14, 2022, and entitled "CONNECTOR ASSEMBLY AND PROCESSING METHOD", the entire contents of which are incorporated herein by reference.

### TECHNICAL FIELD

The disclosure relates to the technical field of automotive electrical appliances, and more particularly to a connector assembly and a processing method.

### BACKGROUND

With the increasing popularity of new energy vehicles, equipment and facilities connected to the new energy automotive electrical appliances have also developed. Because the connector assembly on the new energy vehicle must meet the requirement of high current, the conducting current is relatively high, and the diameter of a cable on the connector assembly also increases. At present, most of the cables on the connector assembly use multi-core copper cables, which have heavy weight and high price, and thus become an obstacle to popularization of new energy vehicles. In addition, although the multi-core cable is soft and can be easily processed and wired, due to too thick diameter and heavy weight, the cable may have frequent friction with the vehicle shell during driving of the vehicle, resulting in damage to the insulation layer of the cable and causing high-voltage discharge, which mildly causes damage to the vehicle and seriously causes serious traffic accidents.

In order to reduce the impact of electromagnetic interference, the conducting cable shields the electromagnetic interference generally by using a shielding net. At present, the commonly used shielding net is formed by knitting metal wires, and thus it is necessary to increase a shield knitting machine in the cable production equipment. The equipment has a high price and occupies a large area, causing that the price of the shielding cable of the connector remains high.

Therefore, there is an urgent need, in the technical field of automotive electrical appliances, of a connector cable and a new cable shielding structure having low price and long service life.

### SUMMARY

The purpose of the disclosure is to use an electrical connection skeleton to replace a multi-core copper cable, which reduces diameter of the cable, reduces weight of the cable, facilitates installation of the cable, reduces the friction with the vehicle shell, and extends the service life of the connector assembly. Conductive plastics or conductive coating is used to replace the knitted shielding net, which reduces the use of shielding net knitting equipment, occupies a small area, reduces the processing cost of the cables, and reduces the production cost of the connector assembly.

According to a first aspect of the disclosure, there is provided with a connector assembly comprising an electrical connection skeleton and a connector connected to two ends of the electrical connection skeleton, wherein the connector includes a connection terminal, an outer shell and an inner shell which is arranged within the outer shell and has a shielding effect, two ends of the electrical connection skeleton are electrically connected to the connection terminal respectively, outer periphery of the electrical connection skeleton is covered with an insulation layer and a shielding layer from the inside to the outside, the shielding layer is electrically connected to the inner shell, material of the inner shell contains a conductive plastic, the outer shell and the inner shell are fixed on at least part of the connection terminal and at least part of the electrical connection skeleton by an integrated molding process.

Alternatively, material of the connection terminal contains copper or copper alloy, material of the electrical connection skeleton contains aluminum or aluminum alloy, and the electrical connection skeleton is electrically connected to the connection terminal by welding or crimping.

Alternatively, the electrical connection skeleton is a rigid body and the tensile strength of the electrical connection skeleton is greater than 75 MPa.

Alternatively, the electrical connection skeleton has a cross section in the shape of one or several of circular, oval, rectangular, polygonal, A-shaped, B-shaped, D-shaped, M-shaped, N-shaped, O-shaped, S-shaped, E-shaped, F-shaped, H-shaped, K-shaped, L-shaped, T-shaped, U-shaped, V-shaped, W-shaped, X-shaped, Y-shaped, Z-shaped, P-shaped, semi-arc, arc, and waved shape.

Alternatively, part of the electrical connection skeleton is flexible.

Alternatively, the electrical connection skeleton includes at least one bending portion.

Alternatively, a cross section of the electrical connection skeleton is of a polygon, and corners of the polygon are all chamfered or rounded.

Alternatively, a cross sectional area of the electrical connection skeleton is 3.5 mm² to 240 mm².

Alternatively, the material of the outer shell or the insulation layer contains one or several of tetraphenyl ethylene, polyvinyl chloride, polyethylene, polyamide, polytetrafluoroethylene, tetrafluoroethylene/hexafluoroethylene copolymer, ethylene/tetrafluoroethylene copolymer, polypropylene, polyvinylidene fluoride, polyurethane, polyterephthalic acid, polyurethane elastomers, styrene block copolymer, perfluoroalkoxy alkane, chlorinated polyethylene, polyphenylene sulfide, polystyrene, crosslinked polyolefin, EPR (ethylene propylene rubber), Ethylene/vinyl acetate copolymer, neoprene rubber, natural rubber, styrene butadiene rubber, nitrile butadiene rubber, silicone rubber, butadiene rubber, isoamyl rubber, ethylene propylene rubber, butyl rubber, fluorine rubber, polyurethane rubber, polyacrylate rubber, chlorosulfonated polyethylene rubber, chloroether rubber, chlorinated polyethylene rubber, chloro-sulfide rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, polyformaldehyde resin.

Alternatively, the conductive plastic is a high molecular material containing conductive particles. The material of the conductive particles contains one or several of metal, conductive ceramics, a carbon-containing conductor, a solid electrolyte, and a mixed conductor. The material of the high molecular material contains one or several of tetraphenyl ethylene, polyvinyl chloride, polyethylene, polyamide, polytetrafluoroethylene, tetrafluoroethylene/hexafluoroethylene copolymer, ethylene/tetrafluoroethylene copolymer, polypropylene, polyvinylidene fluoride, polyurethane, polyterephthalic acid, polyurethane elastomers, styrene block copolymer, perfluoroalkoxy alkane, chlorinated polyethylene, polyphenylene sulfide, polystyrene, crosslinked polyolefin, EPR (ethylene propylene rubber), Ethylene/vinyl acetate copolymer, neoprene rubber, natural rubber, styrene butadiene rubber, nitrile butadiene rubber, silicone rubber, butadiene rubber, isoamyl rubber, ethylene propylene rubber, butyl rubber, fluorine rubber, polyurethane rubber, polyacrylate rubber, chlorosulfonated polyethylene rubber, chloroether rubber, chlorinated polyethylene rubber, chloro-sulfide rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, polyformaldehyde resin.

Alternatively, a volume proportion of the conductive particles in the conductive plastic is between 3% to 95%.

Alternatively, the material of the metal contains one or several of gold, silver, copper, nickel, titanium, tin, aluminum, cadmium, zirconium, chromium, cobalt, manganese, zinc, phosphorus, tellurium, beryllium, tin-lead alloy, silver-antimony alloy, palladium, palladium-nickel alloy or silver-gold-zirconium alloy.

Alternatively, the carbon-containing conductor contains one or more of graphite powder, carbon nanotube material, graphene material, graphite silver or graphene silver.

Alternatively, the inner shell is electrically connected to the shielding layer by means of conductive adhesive bonding or welding or screw connection or crimping or clamping.

Alternatively, conductivity of the inner shell is greater than or equal to 4.8×10⁶ S/m.

Alternatively, an impedance between the shielding layer and the inner shell is less than 80 mQ.

Alternatively, a transfer impedance of the shielding layer is less than 100 mS2.

Alternatively, a transfer impedance of the inner shell is less than 100 mΩ.

Alternatively, an outer insulation layer further sleeves outer periphery of the shielding layer, and the outer insulation layer and the outer shell are partially connected.

Alternatively, one of the connectors is a charging socket.

According to a second aspect of the disclosure, there is provided with a processing method of a connector assembly, for the connector assembly as described above, the processing method comprising:
a step S01: stripping part of the outer insulation layer, the shielding layer and the insulation layer successively at the ends of the electrical connection skeleton after cutting off the electrical connection skeleton at a fixed length;
a step S02: preparing the connection terminal by forging, stamping, extrusion or machining;
a step S03: electrically connecting the electrical connection skeleton to the connection terminal by welding to form a welding semi-finished product;
a step S04: preparing a two-color forming machine and pouring raw materials of the outer shell and the inner shell into a material cylinder of the two-color forming machine;
a step S05: placing the welding semi-finished product in a forming die of the forming machine;
a step S06: opening the two-color forming machine, and injecting the inner shell and the outer shell on part of the connection terminal and part of the electrical connection skeleton successively from inside to outside.

Alternatively, the conductive plastic can be processed by a processing method comprising:
a step S11: preparing raw materials of the conductive particles and processing the raw materials into the conductive particles by crushing;
a step S12: preparing a mixing machine, and mixing the conductive particles and the high molecular material evenly in the plastic mixing machine to form a mixed conductive plastic;
a step S13: preparing a granulator and processing the mixed conductive plastic into the conductive particles.

The advantageous effects of the present disclosure are as follows.
1. An electrical connection skeleton is used to replace a multi-core copper cable, which reduces diameter of the cable, reduces weight of the cable, facilitates installation of the cable, reduces the friction with the vehicle shell, and extends the service life of the connector assembly.
2. The problem that automatic production and assembly cannot be realized due to the use of flexible cables for the charging wire harnesses is solved, and the use of at least partially hard electrical connection skeleton can achieve the automatic fabrication and assembly of wiring harness.
3. Conductive plastics or conductive coating is used to replace the knitted shielding net, which reduces the use of shielding net knitting equipment, occupies a small area, reduces the processing cost of the cables, and reduces the production cost of the connector assembly.
4. The outer shell and the inner shell are fixed on part of the connection terminal and part of the electrical connection skeleton by an integrated molding process. The processing is convenient, the product weight is reduced, and the waterproof sealing effect of the connector can be guaranteed, and the production cost of the connector is reduced.
5. The electrical connection skeleton is further provided with a flexible portion and a bending portion, and according to the installation environment of the vehicle body, the structure of the connector assembly can be reasonably designed, so that the connector assembly can be installed on the vehicle body more easily, thereby saving the assembly time.

Other features and advantages of the present disclosure will become clear from the following detailed description of exemplary embodiments of the present disclosure with reference to the accompanying drawings.

### BRIEF DESCRIPTION OF THE DRAWINGS

The accompanying drawings incorporated in and forming part of the specification show embodiments of the present disclosure and, together with description thereof, are used to explain the principle of the present disclosure.
FIG. 1 is a structural schematic of a connector assembly using a new shielding material of the disclosure.
FIG. 2 is a cross-sectional view of an inner shell of a connector assembly using a new shielding material of the disclosure.

The reference numerals in the drawings are as below:
1. electrical connection skeleton;
11. insulation layer;
12. shielding layer;
13. outer insulation layer;
2. connector;
21. outer shell;
3. connection terminal;
4. inner shell.

### DETAILED DESCRIPTION

Various exemplary embodiments of the disclosure will now be described in detail with reference to the accompanying drawings. It should be noted that, unless otherwise specified, the relative arrangements, numerical expressions, and numerical values of parts and steps set forth in these embodiments do not limit the scope of the present disclosure.

The following description of at least one exemplary embodiment is in fact illustrative only and in no way constitutes any limitation to the present disclosure, and its disclosure or use.

Technologies, methods and apparatuses known to those ordinarily skilled in the art may not be discussed in detail, but where appropriate, said technologies, methods and apparatuses shall be considered as part of the specification.

In all the examples shown and discussed here, any specific value should be interpreted as merely exemplary and does not serve as limitation. Therefore, other examples of the exemplary embodiments may have different values.

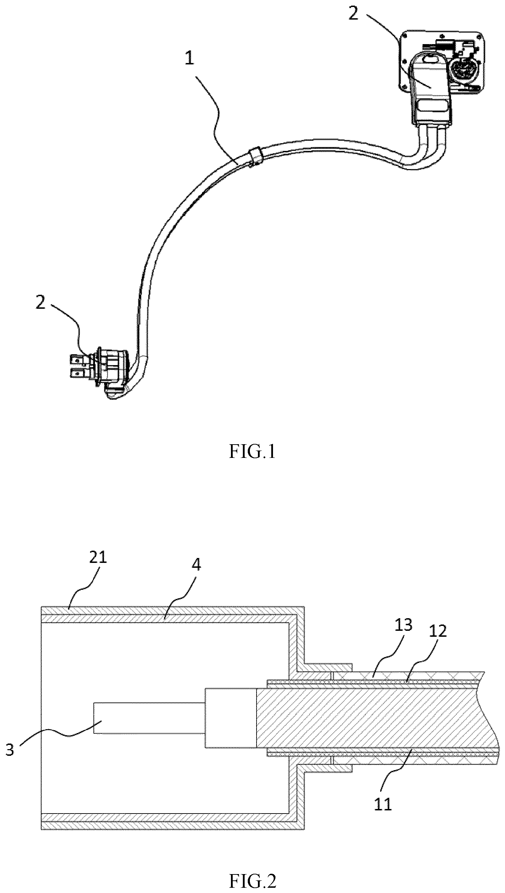

A connector assembly, as shown in FIGs. 1 to 2, comprises an electrical connection skeleton 1 and a connector 2 connected to two ends of the electrical connection skeleton 1, wherein the connector 2 includes a connection terminal 3, an outer shell 21 and an inner shell 4 which is arranged within the outer shell 21 and has a shielding effect, two ends of the electrical connection skeleton 1 are electrically connected to the connection terminal 3 respectively, outer periphery of the electrical connection skeleton 1 is covered with an insulation layer 11 and a shielding layer 12 from the inside to the outside, the shielding layer 12 is electrically connected to the inner shell 4, material of the inner shell 4 contains a conductive plastic, the outer shell 21 and the inner shell 4 are fixed on at least part of the connection terminal 3 and at least part of the electrical connection skeleton 1 by an integrated molding process.

At present, the charging cables on most of the connector assembly use multi-core copper cables, which have heavy weight and high price, and thus become an obstacle to popularization of new energy vehicles. In addition, although the multi-core cable is soft and can be easily processed and wired, due to too thick diameter and heavy weight, the cable may have frequent friction with the vehicle shell during driving of the vehicle, resulting in damage to the insulation layer 11 of the cable and causing high-voltage discharge, which mildly causes damage to the vehicle and seriously causes serious traffic accidents. Therefore, in the present disclosure, the multi-core cable structure can be replaced with the cable form of the electrical connection skeleton 1, so that the cable can be fixed on the vehicle shell, and may not have friction with the vehicle shell along with vibration of the vehicle, thereby extending the service life of the connector and reducing the accident rate. The electrical connection skeleton 1 can be a singlecore copper rod or aluminum rod.

In order to reduce the impact of electromagnetic interference, the conducting cable shields the electromagnetic interference generally by using a shielding net. At present, the commonly used shielding net is formed by knitting metal wires, and thus it is necessary to increase a shield knitting machine in the cable production equipment. The equipment has a high price and occupies a large area, causing that the price of the shielding cable of the connector 2 remains high.

The electrical connection skeleton 1 is mostly used to transmit high current inside, a large electromagnetic field is generated when the current passes. In order to prevent the electromagnetic field generated by the high current from causing electromagnetic interference to the electrical appliances in the vehicle and thus affecting the normal operation of other electrical appliances, it is therefore desirable to electromagnetically shield the electromagnetic field generated by the high current. The data communication cable, by contrast, transmits an electromagnetic signal inside. The electromagnetic signal may be interfered by the external electromagnetic field, resulting in the distortion of the electromagnetic signal, thus the signal cannot be effectively transmitted, therefore, electromagnetic shielding is needed to shield the external electromagnetic field interference.

The electromagnetic shielding refers to that mainly a shield is used to prevent the influence of high-frequency electromagnetic field, so as to effectively control the radiation transmission of electromagnetic waves from a certain area to another area. The basic principle is that, a low resistance conductor material is used to make a shield, the electromagnetic wave is reflected on the surface of the shield, absorbed inside the shield and lost in the transmission process to produce shielding effect. The electrical connection skeleton 1 needs to be electromagnetically shielded, and besides, the connection part thereof with the connector 2 and the connection terminal 3 also needs to be electromagnetically shielded particularly. The two ends of the electrical connection skeleton 1 of the present disclosure are connected to the connection terminal 3 of the connector 2 respectively, and these connection parts are arranged in the inner shell 4, and the inner shell 4 is electrically connected to the shielding layer 12 outside the electrical connection skeleton 1, so as to achieve the effect of complete shielding. The insulation layer 11 is arranged between the shielding layer 12 and the electrical connection skeleton 1 to prevent electrical connection between the two.

In the present disclosure, an electrical connection skeleton 1 is used to replace a multi-core copper cable, which reduces diameter of the cable, reduces weight of the cable, facilitates installation of the cable, reduces the friction with the vehicle shell, and extends the service life of the connector assembly. Conductive plastics or conductive coating is used to replace the knitted shielding net, which reduces the use of shielding net knitting equipment, occupies a small area. The outer shell and the inner shell are fixed on part of the connection terminal and part of the electrical connection skeleton by an integrated molding process (e.g., injection). The processing is convenient, the product weight is reduced, and the waterproof sealing effect of the connector can be guaranteed, and the production cost of the connector assembly is reduced.

In some embodiments, the material of the connection terminal 3 contains copper or copper alloy, the material of the electrical connection skeleton 1 contains aluminum or aluminum alloy, and the electrical connection skeleton 1 is electrically connected to the connection terminal by welding or crimping. Copper or copper alloy has high electrical conductivity and is resistant to friction, can be widely used in the field of electrical transmission. The electrical connection skeleton 1 made of aluminum or aluminum alloy has the advantages of good rigidity, light weight and high transmission efficiency, especially suitable for the transmission of large current. The electrical connection skeleton 1 is connected to the connection terminal by welding. The welding methods adopted include one or several of resistance welding, friction welding, ultrasonic welding, arc welding, laser welding, electron beam welding, pressure diffusion welding and magnetic induction welding. The welding refers to that the concentrated heat energy or pressure is used to create a fused connection at a position of contact between the connection terminal and the electrical connection skeleton 1, to produce stable connection by the welding. Such welding can achieve connection of dissimilar materials, and has better conductive effect due to contact position fusion.

The resistance welding refers to a method of welding by strong current passing through the contact point between the electrode and the workpiece to generate heat from the contact resistance.

The friction welding refers to a method of welding by using the heat generated by the friction of the workpiece contact surface as the heat source to make the workpiece produce plastic deformation under the action of pressure.

The ultrasonic welding refers to that high-frequency vibration wave is transmitted to the surfaces of two objects to be welded, and under pressurization, the surfaces of two objects rub against each other to form a fusion between molecular layers.

The arc welding refers to that electric arc is taken as the heat source and the physical phenomenon of atmospherical discharges is utilized to convert electrical energy into thermal and mechanical energy required for welding, so as to achieve the purpose of connecting metal, and the main methods include welding electrode arc welding, submerged arc welding, gas shielded welding and so on.

The laser welding method refers to an efficient and precise welding method using a laser beam with high energy density as a heat source.

The friction welding method refers to a method of welding by using the heat generated by the friction of the workpiece contact surface as the heat source to make the workpiece produce plastic deformation under the action of pressure.

The electron beam welding method refers to the use of accelerated and focused electron beam to bombard the welding surface placed in vacuum or non-vacuum, so that the welded workpiece is melted to achieve welding.

The pressure welding method is a method of applying pressure to a weldment to make the binding surface be in contact closely to produce a certain plastic deformation and complete the welding.

The magnetic induction welding refers to that instantaneous high-speed collision occurs between two workpieces to be welded under the action of strong pulsed magnetic field, and when surface of the material is subjected to high pressure waves, the atoms of the two materials meet in the interatomic distance, thus forming a stable metallurgical bond at the interface, which is a type of solid-state cold welding that can weld together conductive metals with similar or dissimilar properties.

The crimping refers to the production process that after the electrical connection skeleton 1 and the connection terminal 3 are assembled, the two are stamped into one using a crimping machine. The advantage of crimping is mass production, and a large amount of products with stable quality can be produced quickly by using an automatic crimping machine.

In some embodiments, the electrical connection skeleton 1 is a rigid body and the tensile strength of the electrical connection skeleton 1 is greater than 75 MPa. The rigid body refers to an object whose shape and size do not change in motion and after the force is applied thereto, and the relative position of the internal points does not change. Absolutely rigid body does not actually exist, but is only an ideal model, because any object is more or less deformed after the force is applied thereto, and if the degree of deformation is extremely small relative to the geometric size of the object itself, and the deformation can be ignored when studying the movement of the object. Therefore, in the process of use of the electrical connection skeleton 1 made of rigid body material, the deformation generated is negligible and can be ignored, and the greater the tensile strength of the rigid body is, the less the deformation is.

In order to verify the influence on the torque at the time of bending of the electrical connection skeleton 1 in the XY direction and whether abnormal sound occurs in the vibration process, caused by the tensile strength of the electric connection skeleton 1, the inventor selects a sample of the electrical connection skeleton 1 with the same size specification and using different tensile strengths to test the torque at the time of bending of the electrical connection skeleton 1 and the abnormal sound in the vibration process.

The tensile value of the electrical connection skeleton 1 is tested by using a universal tension testing machine to fix the two ends of the electrical connection skeleton 1 on a tensile fixture of the universal tension testing machine, and to stretch the sample at a speed of 50 mm/min and record the tensile value at the time of being pulled broken. In this embodiment, the tensile value greater than 1600 N is a qualified value.

The torque of the electrical connection skeleton 1 is tested by using a torque tester to test the torque value by which the electrical connection skeleton 1 is deformed during bending when the electrical connection skeleton 1 is bent at 90° at the same radius and at the same speed, and in this embodiment, a torque value less than 60 N•m is a qualified value.

Whether the electrical connection skeleton 1 produces abnormal sound is tested by selecting a sample of the electrical connection skeleton 1 with the same size specification and using different tensile strengths, assembling the connectors 2 of the same specification together and fixing them on a vibration test bench, and observing whether the electrical connection skeleton 1 produces abnormal sound in the vibration test process.

**Table 1: Influence of different tensile strengths on the torque value and abnormal sound of the electrical connection skeleton 1**

| Different tensile strengths (MPa) | | | | | | | | | | | |
|---|---|---|---|---|---|---|---|---|---|---|---|
| 60 | 75 | 100 | 130 | 180 | 230 | 280 | 330 | 380 | 430 | 480 | 500 |

| The tension value (N) when the electrical connection skeleton 1 is pulled broken | | | | | | | | | | | |
|---|---|---|---|---|---|---|---|---|---|---|---|
| 1522 | 1587 | 1688 | 1709 | 1759 | 1815 | 1856 | 1909 | 1950 | 1989 | 2040 | 2067 |

| Torque value at which bending is performed in a horizontal direction (N•m) | | | | | | | | | | | |
|---|---|---|---|---|---|---|---|---|---|---|---|
| 6 | 8 | 9 | 18 | 27 | 34 | 44 | 46 | 49 | 52 | 59 | 70 |

| Whether the electrical connection skeleton 1 produces abnormal sound | | | | | | | | | | | |
|---|---|---|---|---|---|---|---|---|---|---|---|
| YES | YES | NO | NO | NO | NO | NO | NO | NO | NO | NO | NO |

As can be seen from Table 1 above, when the tensile strength of the electrical connection skeleton 1 is less than or equal to 75 MPa, the tensile value of the electrical connection skeleton 1 when it is pulled broken is less than 1600 N. At this time, the strength of the electrical connection skeleton 1 itself is not high, and the electrical connection skeleton 1 is easily pulled broken when subjected to a small external force, resulting in function failure of the electrical connection skeleton 1, and thus the purpose of electric energy transmission cannot be achieved. On the other hand, because the larger the tensile strength of the electrical connection skeleton 1 is, the less easily the electrical connection skeleton 1 deforms, so in the vibration test process, the less easily the electrical connection skeleton 1 produces abnormal sound relative to vibration of the connectors 2 connected at both ends. On the contrary, the smaller the tensile strength of the electrical connection skeleton 1 is, the more easily the electrical connection skeleton 1 deforms, so in the vibration test process, the more easily the electrical connection skeleton 1 produces abnormal sound relative to vibration of the connectors 2 connected at both ends. As can be seen from Table 1 above, when the tensile strength of the electrical connection skeleton 1 is less than or equal to 75 MPa, the electrical connection skeleton 1 may produce abnormal sound during the vibration test. Therefore, the inventor prefers that the tensile strength is greater than 75 MPa.

In some embodiments, the electrical connection skeleton 1 has a cross section in the shape of one or several of circular, oval, rectangular, polygonal, A-shaped, B-shaped, D-shaped, M-shaped, N-shaped, O-shaped, S-shaped, E-shaped, F-shaped, H-shaped, K-shaped, L-shaped, T-shaped, U-shaped, V-shaped, W-shaped, X-shaped, Y-shaped, Z-shaped, P-shaped, semi-arc, arc, and waved shape.

In some embodiments, part of the electrical connection skeleton 1 is a flexible body.

By setting part of the electrical connection skeleton 1 to be flexible (i.e., a flexible conductor), it is possible to ensure that the electrical connection skeleton 1 can be bent by a large angle, so as to be conveniently disposed in the vehicle body with a large corner.

In specific implementation, by setting the area of the electrical connection skeleton 1 that needs to be bent to be flexible, the electrical connector assembly can be assembled on the vehicle, which is easier to install, easy to operate, and reduce production hours.

In specific implementation, by setting at least part of the electrical connection skeleton 1 to be flexible (i.e., flexible conductor), the electrical connection skeleton 1 can be easily fixed to the vehicle body when it is assembled with the vehicle body, which can reduce abnormal sound between the flexible conductor and the vehicle shell or the connector 2 connected at both ends that is produced due to vibration of the flexible conductor, and avoid fracture occurring at the connection part of the connection terminal 3. At the same time, it is also possible to avoid damage to the insulating protection layer due to frequent friction between part of the flexible conductor and the vehicle body, and to avoid short-circuit phenomenon when the flexible conductor is electrically connected to the vehicle body, which may cause the vehicle to burn in serious cases.

In some embodiments, the electrical connection skeleton 1 includes at least one bending portion.

In specific implementation, the bending portion can be arranged on the electrical connection skeleton 1 according to the needs, such that the bending portion is arranged at a position where the direction of the electrical connection skeleton 1 needs to be changed in the process of wiring on the vehicle, which is convenient for the operator to arrange wire, can reduce the processing time of the vehicle, reduce the production cost of the vehicle and increase the market competitiveness.

In some embodiments, the cross-section shape of the electrical connection skeleton 1 is a polygon, and corners of the polygon are all chamfered or rounded.

In specific implementation, the corners of the electrical connection skeleton 1 whose cross section is of a polygon are all chamfered or rounded, which can facilitate connection between the electrical connection skeleton 1 and the connection terminal, so that the connection between the electrical connection skeleton 1 and the connection terminal is more firm when they are welded or crimped, the contact area is larger, and the current conduction is better; it is possible to prevent overlarge electrical resistance due to too small contact area between the electrical connection skeleton 1 and the connection terminal when they are connected, causing heating and even burning accidents; and it is also possible to prevent personnel casualties and property loss that are caused because a seamed edge formed by two adjacent sides of the polygon scratches the insulation layer during use.

In some embodiments, the electrical connection skeleton 1 has a cross-sectional area of 3.5 mm² to 240 mm². The cross-sectional area of the electrical connection skeleton 1 determines the current that the electrical connection skeleton 1 can conduct. Under normal circumstances, the electrical connection skeleton 1 that achieves signal conduction has a small current and a small cross-sectional area. For example, the smallest cross-sectional area of the electrical connection skeleton 1 for transmitting signals can reach 3.5 mm². The electrical connection skeleton 1 that achieves power conduction has a large current and a large cross-sectional area. For example, a car battery harness has a largest cross-sectional area of the conductor of 240 mm².

In some embodiments, the material of the outer shell 21 or the insulation layer 11 contains one or several of tetraphenyl ethylene, polyvinyl chloride, polyethylene, polyamide, polytetrafluoroethylene, tetrafluoroethylene/hexafluoroethylene copolymer, ethylene/tetrafluoroethylene copolymer, polypropylene, polyvinylidene fluoride, polyurethane, polyterephthalic acid, polyurethane elastomers, styrene block copolymer, perfluoroalkoxy alkane, chlorinated polyethylene, polyphenylene sulfide, polystyrene, crosslinked polyolefin, EPR (ethylene propylene rubber), Ethylene/vinyl acetate copolymer, neoprene rubber, natural rubber, styrene butadiene rubber, nitrile butadiene rubber, silicone rubber, butadiene rubber, isoamyl rubber, ethylene propylene rubber, butyl rubber, fluorine rubber, polyurethane rubber, polyacrylate rubber, chlorosulfonated polyethylene rubber, chloroether rubber, chlorinated polyethylene rubber, chloro-sulfide rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, polyformaldehyde resin.

Hereinafter the properties of materials are illustrated.

Polyformaldehyde is a material that has a smooth surface, is glossy, hard and dense, has light yellow or white color, and can be used for a long time in the temperature range of -40°C to 100°C. Its wear resistance and self-lubrication are also superior to most engineering plastics, and it also has good oil resistance and peroxide resistance.

Polycarbonate is colorless transparent, heat resistant, impact resistant, and is at a flame retardant BI grade, and has good mechanical properties in ordinary use temperature. Compared with polymethyl methacrylate with similar properties, polycarbonate has good impact resistance, high refractive index, good processing performance, and has very advanced flame retardant properties without additives.

Polyamide is non-toxic, has light weight and excellent mechanical strength, has good wear resistance and corrosion resistance, can replace copper and other metals to be used in mechanical, chemical, instrumentation, automotive and other industries to manufacture bearings, gears, pump blades and other parts.

Further, the conductive plastic is a high molecular material containing conductive particles. The material of the conductive particles contains one or several of metal, conductive ceramics, a carbon-containing conductor, a solid electrolyte, and a mixed conductor. The material of the high molecular material contains one or several of tetraphenyl ethylene, polyvinyl chloride, polyethylene, polyamide, polytetrafluoroethylene, tetrafluoroethylene/hexafluoroethylene copolymer, ethylene/tetrafluoroethylene copolymer, polypropylene, polyvinylidene fluoride, polyurethane, polyterephthalic acid, polyurethane elastomers, styrene block copolymer, perfluoroalkoxy alkane, chlorinated polyethylene, polyphenylene sulfide, polystyrene, crosslinked polyolefin, EPR (ethylene propylene rubber), Ethylene/vinyl acetate copolymer, neoprene rubber, natural rubber, styrene butadiene rubber, nitrile butadiene rubber, silicone rubber, butadiene rubber, isoamyl rubber, ethylene propylene rubber, butyl rubber, fluorine rubber, polyurethane rubber, polyacrylate rubber, chlorosulfonated polyethylene rubber, chloroether rubber, chlorinated polyethylene rubber, chloro-sulfide rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, polyformaldehyde resin. Conductive plastics containing different particles can be selected according to needs.

Further, a volume proportion of the conductive particles in the conductive plastics is between 3% to 95%. If the volume proportion of the conductive particles is too small, the conductivity of the conductive plastics is insufficient and the ideal shielding effect cannot be achieved. Therefore, the inventor carries out tests on conductive plastics with volume proportions of different conductive particles. If the conductivity of the conductive plastics is less than 99%, it is regarded as unqualified, and the test results are shown in Table 2.

**Table 2: Influence of conductive plastics with volume proportions of different conductive particles on the conductivity**

| Volume proportions of different conductive particles | | | | | | | | | | | | |
|---|---|---|---|---|---|---|---|---|---|---|---|---|
| 2 | 3 | 5 | 10 | 20 | 30 | 40 | 50 | 60 | 85 | 95 | 96 | 97 |

| Electric conductivity of the conductive plastics (%) | | | | | | | | | | | | |
|---|---|---|---|---|---|---|---|---|---|---|---|---|
| 98.9 | 99.1 | 99.1 | 99.2 | 99.2 | 99.2 | 99.3 | 99.3 | 99.4 | 99.4 | 99.6 | 99.6 | 99.6 |

As can be seen from Table 2, when the volume proportion of the conductive particles is less than 3%, the conductivity of the conductive plastics is less than 99%, which can not meet the needs; when the volume proportion of the conductive particles is greater than 95% and the conductivity does not increase, and the required process requirement is becoming higher and higher, therefore, the inventor prefers that the volume proportion of the conductive particles in the conductive plastics is between 3% to 95%.

In some embodiments, the material of the metal contains one or several of gold, silver, copper, nickel, titanium, tin, aluminum, cadmium, zirconium, chromium, cobalt, manganese, zinc, phosphorus, tellurium, beryllium, tin-lead alloy, silver-antimony alloy, palladium, palladium-nickel alloy or silver-gold-zirconium alloy. In order to demonstrate the influence of different metal materials on the conductivity of the conductive coating and the conductive plastics, the inventor carries out tests taking the conductive plastics as an example, by using metal particles of the same specification and size and different materials to make samples of the conductive plastics, to test the electric conductivity of the conductive plastics respectively, and the experimental results are shown in Table 3 below. In this embodiment, the electric conductivity of the conductive plastics being greater than 99% is regarded as an ideal value.

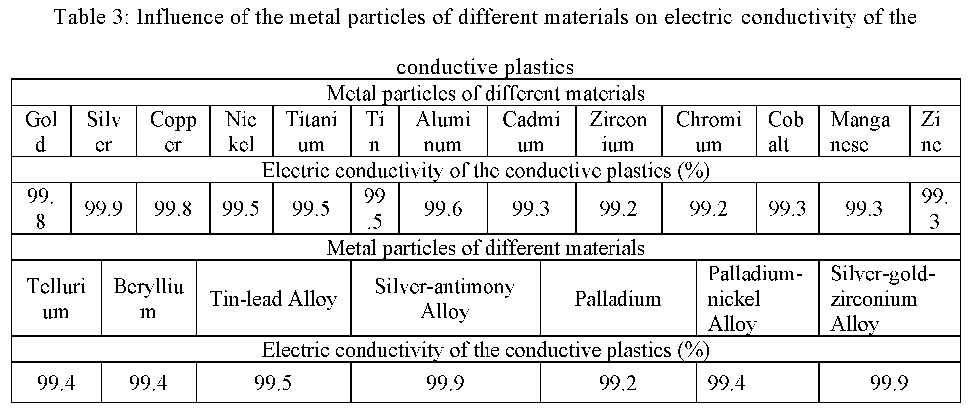

As can be seen from Table 3, the electric conductivity of the conductive plastic made of the selected different metal particles is within the range of the ideal value. In addition, phosphorus is a non-metal material and cannot be directly used as material of the conductive plating, but it can be added into other metals to form alloy to improve the conductive and mechanical properties of the metal itself. Therefore, the inventor sets that the material of the metal particles contains one or several of gold, silver, copper, nickel, titanium, tin, aluminum, cadmium, zirconium, chromium, cobalt, manganese, zinc, tin-lead alloy, silver-antimony alloy, palladium, palladium-nickel alloy or silver-gold-zirconium alloy.

In some embodiments, the carbon-containing conductor contains one or more of graphite powder, carbon nanotube material, graphene material, graphite silver or graphene silver. Graphite powder is a kind of mineral powder, mainly composed of a carbon simple substance, soft, black and gray; Graphite powder is a good non-metallic conductive material. Carbon nanotubes have good electrical conductivity, and because the carbon nanotubes have the same structure as the lamellar structure of graphite, they have good electrical properties. Particularly, graphene has extremely high electrical properties, and the carbon-containing conductors containing these three materials have high conductivity and good shielding performance, which can achieve electromagnetic shielding to the electrical connection skeleton 1 very well.

In some embodiments, the inner shell 4 is electrically connected to the shielding layer 12 by means of conductive adhesive bonding or welding or screw connection or crimping or clamping. Conductive adhesive is a kind of adhesive with certain electrical conductivity after being cured or dried. It can connect a variety of conductive materials together to form an electrical path between the connected materials. In the electronic industry, the conductive adhesive has become an indispensable new material. The connection by means of conductive adhesive can ensure the conductivity between the inner shell 4 and the shielding layer 12, and play a better shielding effect. Hot pressure welding is to weld by pressure the welding regions of the inner shell 4 and the shielding layer 12 together by heating and pressurizing. The principle is to make the welding regions being plastically deformed through heating and pressurizing, so that the gravitational range of atoms is reached between the contact surface of the inner shell 4 and the shielding layer 12, so that attractive force is generated between the atoms, to achieve the purpose of bonding. The crimping refers to the production process that after the inner shell 4 and the shielding layer 12 are assembled, the two are stamped into one using a crimping machine. The advantage of crimping is mass production, and a large amount of products with stable quality can be produced quickly by using an automatic crimping machine. The connection by means of crimping can ensure the conductivity between the inner shell 4 and the shielding layer 12, and play a better shielding effect. In addition, the screw connection and clamping are also the connection methods between the inner shell 4 and the shielding layer 12, which can ensure the good conductivity between the inner shell 4 and the shielding layer 12; at the same time, when the connector assembly is faulty, maintenance and inspection can be carried out, the damaged parts can be replaced, the subsequent maintenance can be facilitated, and the maintenance cost can be reduced during the use by the customer.

In some embodiments, the conductivity of the inner shell 4 is greater than or equal to 4.8×10⁶ S/m.

The conductivity of the inner shell 4 should be as large as possible so that the eddy current generated by the inner shell 4 can flow back to the energy source or ground position without hindrance. If the conductivity of the inner shell 4 is small, the current generated in the inner shell 4 is too small, and it is not easy to derive the eddy current, thus affecting the shielding effect of the inner shell 4.

In order to verify the influence of the conductivity of the inner shell 4 on the shielding effect, the inventor uses the electrical connection skeleton 1, the connector 2 and the connection terminal 3 of the same specification, and a series of samples of the inner shell 4 of the same specification that is made of materials with different conductivities and of the shielding layer 12 are made to respectively test the shielding effect, and the experimental results are shown in Table 4 below. In this embodiment, the shielding performance value greater than 40 dB is the ideal value.

The test method of the shielding performance value is to use test instrument to output a signal value (this value is the test value 1) to the electrical connection skeleton 2, and to provide a detection device outside the inner shell 4, and the detection device detects a signal value (this value is the test value 1). Shielding performance value = test value 2 - test value 1.

**Table 4: Influence of conductivity of the inner shell 4 on the shielding performance**

| Conductivity of the inner shell 4 (×**10⁶ S/m**) | | | | | | | | | |
|---|---|---|---|---|---|---|---|---|---|
| 4.6 | 4.7 | 4.8 | 4.9 | 5.0 | 5.1 | 5.2 | 5.3 | 5.4 | 5.5 |

| Shielding performance value (dB) | | | | | | | | | |
|---|---|---|---|---|---|---|---|---|---|
| 33 | 38 | 42 | 46 | 48 | 51 | 56 | 59 | 63 | 65 |

As can be seen from Table 5, when the conductivity of the conductive medium layer 12 is less than 4.8×10⁶ S/m, the shielding performance value is less than 40dB, which does not meet the requirement of the ideal value; when the conductivity of conductive medium layer 12 is greater than or equal to 4.8×10⁶ S/m, the shielding performance values all meet the requirement of the ideal value, and the trend is getting better and better. Therefore, the inventor sets the conductivity of the conductive medium layer 12 to be greater than or equal to 4.8×10⁶ S/m.

In some embodiments, the impedance between the shielding layer 12 and the inner shell 4 is less than 80 mΩ.

The impedance between the shielding layer 12 and the inner shell 4 shall be as small as possible, so that the current generated by the inner shell 4 may flow back without hinder to the energy source or the grounding position. If the impedance between the shielding layer 12 and the inner shell 4 is large, high current may be generated between the shielding layer 12 and the inner shell 4, resulting in a large radiation at the cable connection.

In order to verify the influence of the impedance value between the shielding layer 12 and the inner shell 4 on the shielding effect, the inventor uses the electrical connection skeleton 1, the connector 2 and the connection terminal 3 of the same specification, and uses different impedances between the shielding layer 12 and the inner shell 4 to make a series of samples to respectively test the shielding effect, and the experimental results are shown in Table 5 below. In this embodiment, the shielding performance value greater than 40 dB is regarded as the ideal value.

The test method of the shielding performance value is to use test instrument to output a signal value (this value is the test value 1) to the electrical connection skeleton 2, and to provide a detection device outside the inner shell 4, and the detection device detects a signal value (this value is the test value 1). Shielding performance value = test value 2 - test value 1.

**Table 5: Influence of impedance between the shielding layer 12 and the inner shell 4 on the shielding performance**

| Measuring parameter | Impedance between the shielding layer 12 and the inner shell 4 (mΩ) | | | | | | | | | | |
|---|---|---|---|---|---|---|---|---|---|---|---|
| | 5 | 10 | 20 | 30 | 40 | 50 | 60 | 70 | 80 | 90 | 100 |
| Shielding performance value (dB) | 76 | 73 | 71 | 66 | 61 | 57 | 52 | 47 | 37 | 33 | 28 |

As can be seen from Table 5, when the impedance value between the shielding layer 12 and the inner shell 4 is greater than 80 mΩ, the shielding performance value is less than 40 dB, which does not meet the ideal value requirements; while when the impedance value between the shielding layer 12 and the inner shell 4 is less than 80 mΩ, the shielding performance values all meet the ideal value requirements, and the trend is getting better and better. Therefore, the inventor sets the impedance between the shielding layer 12 and the inner shell 4 to be less than 80 mQ.

In some embodiments, the transfer impedance of the shielding layer 12 is less than 100 mΩ. The shielding material usually uses the transfer impedance to characterize the shielding effect of the shielding layer 12, and the smaller the transfer impedance is, the better the shielding effect is. The transfer impedance of the shielding layer 12 is defined as the ratio of the differential mode voltage U induced by the shield per unit length to the current Is passing through the shield surface, i.e.,

Z_{T}=U/I_{S}, so that it can be understood that the transfer impedance of the shielding layer 12 converts the current of the shielding layer 12 into differential mode interference. The smaller the transfer impedance is, the better it is. That is, better shielding performance can be obtained by reducing the differential mode interference conversion.

In order to verify the influence of the shielding layer 12 having different transfer impedance values on the shielding effect, the inventor uses the electrical connection skeleton 1, the connector 2 and the connection terminal 3 of the same specification, and uses the shielding layer 12 having different transfer impedance values to make a series of samples to respectively test the shielding effect, and the experimental results are shown in Table 6 below. In this embodiment, the shielding performance value greater than 40 dB is the ideal value.

The test method of the shielding performance value is to use test instrument to output a signal value (this value is the test value 1) to the electrical connection skeleton 2, and to provide a detection device outside the shielding layer 12, and the detection device detects a signal value (this value is the test value 1). Shielding performance value = test value 2 - test value 1.

**Table 6: Influence of transfer impedance of the shielding layer 12 on the shielding performance**

| Measuring parameter | Transfer impedance of shielding layer 12 (mΩ) | | | | | | | | | | |
|---|---|---|---|---|---|---|---|---|---|---|---|
| | 20 | 30 | 40 | 50 | 60 | 70 | 80 | 90 | 100 | 110 | 120 |
| Shielding performance value (dB) | 79 | 75 | 71 | 66 | 63 | 58 | 53 | 46 | 37 | 30 | 27 |

As can be seen from Table 6 above, when the transfer impedance value of the shielding layer 12 is greater than or equal to 100 mQ, the shielding performance value of the shielding layer 12 is less than 40 dB, which does not meet the requirements of the ideal value; and when the transfer impedance value of the shielding layer 12 is less than 100 mΩ, the shielding performance values of the shielding layer 12 all meet the requirement of the ideal value, and the trend is getting better and better, therefore, the inventor sets the transfer impedance of the shielding layer 12 to be less than 100 mΩ.

In some embodiments, the transfer impedance of the inner shell 4 is less than 100 mΩ. In order to verify the influence of the inner shell 4 having different transfer impedance values on the shielding effect, the inventor uses the electrical connection skeleton 1, the connector 2 and the connection terminal 3 of the same specification, and uses the inner shell 4 having different transfer impedance values to make a series of samples to respectively test the shielding effect, and the experimental results are shown in Table 7 below. In this embodiment, the shielding performance value greater than 40 dB is the ideal value.

The test method of the shielding performance value is to use test instrument to output a signal value (this value is the test value 1) to the electrical connection skeleton 2, and to provide a detection device outside the inner shell 4, and the detection device detects a signal value (this value is the test value 1). Shielding performance value = test value 2 - test value 1.

**Table 7: Influence of transfer impedance of the inner shell 4 on the shielding performance**

| Measuring parameter | Transfer impedance of the inner shell 4 (mΩ) | | | | | | | | | | |
|---|---|---|---|---|---|---|---|---|---|---|---|
| | 20 | 30 | 40 | 50 | 60 | 70 | 80 | 90 | 100 | 110 | 120 |
| Shielding performance value (dB) | 79 | 75 | 71 | 66 | 63 | 58 | 53 | 46 | 37 | 30 | 27 |

As can be seen from Table 7 above, when the transfer impedance value of the inner shell 4 is greater than 100 mΩ, the shielding performance value of the inner shell 4 is less than 40 dB, which does not meet the requirements of the ideal value; and when the transfer impedance value of the inner shell 4 is less than 100 mΩ, the shielding performance values of the inner shell 4 all meet the requirement of the ideal value, and the trend is getting better and better, therefore, the inventor sets the transfer impedance of the inner shell 4 to be less than 100 mΩ.

In some embodiments, an outer insulation layer 13 further sleeves outer periphery of the shielding layer 12, and the outer insulation layer 13 and the outer shell 21 are partially connected. As shown in FIG. 2, an outer insulation layer 13 further sleeves outer periphery of the shielding layer 12. The outer insulation layer 13 is used to insulate the shielding layer 12 from external devices, so as to prevent the possibility of short circuit that may occur when the shielding layer 12 is connected to the vehicle body.

In some embodiments, one of the connectors 2 is a charging socket. With the increasing popularity of new energy vehicles, equipment and facilities supplying power to the new energy vehicles have also developed. Because the rechargeable battery on the new energy vehicle needs to meet the requirements of fast charging, a charging socket assembly is required. In the present disclosure, one of the connectors 2 is a charging socket which is connected to a charging gun, and the connector 2 on the other end is a high-voltage connector, which is connected to the rechargeable battery to achieve the purpose of charging the rechargeable battery.

The disclosure further discloses a processing method of a connector assembly, for producing the connector assembly as described above, the processing method comprising:
a step S01: stripping part of the outer insulation layer 13, the shielding layer 12 and the insulation layer 11 successively at the ends of the electrical connection skeleton 1 after cutting off the electrical connection skeleton at a fixed length;
a step S02: preparing the connection terminal 3 by forging, stamping, extrusion or machining;
a step S03: electrically connecting the electrical connection skeleton 1 to the connection terminal 3 by welding to form a welding semi-finished product;
a step S04: preparing a two-color forming machine and pouring raw materials of the outer shell 21 and the inner shell 4 into a material cylinder of the two-color forming machine;
a step S05: placing the welding semi-finished product in a forming die of the forming machine;
a step S06: opening the two-color forming machine, and injecting the inner shell 4 and the outer shell 21 on part of the connection terminal 3 and part of the electrical connection skeleton 1 successively from inside to outside.

Further, the conductive plastic can be processed by a processing method comprising:
a step S11: preparing raw materials of the conductive particles and processing the raw materials into the conductive particles by crushing;
a step S12: preparing a mixing machine, and mixing the conductive particles and the high molecular material evenly in the plastic mixing machine to form a mixed conductive plastic;
a step S13: preparing a granulator and processing the mixed conductive plastic into the conductive particles.

Although some specific embodiments of the disclosure have been described in detail by examples, it should be understood by those skilled in the art that the above examples are intended only for illustration and not to limit the scope of the disclosure. Those skilled in the art should understand that the above embodiments may be modified without departing from the spirit or scope of the disclosure. The scope of the disclosure is limited by the appended claims.

## Claims

1. A connector assembly comprising an electrical connection skeleton and a connector connected to two ends of the electrical connection skeleton, **characterized in that**, the connector includes a connection terminal, an outer shell and an inner shell which is arranged within the outer shell and has a shielding effect, two ends of the electrical connection skeleton are electrically connected to the connection terminal respectively, outer periphery of the electrical connection skeleton is covered with an insulation layer and a shielding layer from the inside to the outside, the shielding layer is electrically connected to the inner shell, material of the inner shell contains a conductive plastic, the outer shell and the inner shell are fixed on at least part of the connection terminal and at least part of the electrical connection skeleton by an integrated molding process.

2. The connector assembly according to claim 1, **characterized in that**, the material of the connection terminal contains copper or copper alloy, the material of the electric connection skeleton contains aluminum or aluminum alloy, and the electrical connection skeleton is electrically connected to the connection terminal by welding or crimping.

3. The connector assembly according to claim 1, **characterized in that**, the electrical connection skeleton is a rigid body and the tensile strength of the electrical connection skeleton is greater than 75 MPa.

4. The connector assembly according to claim 1, **characterized in that**, the electrical connection skeleton has a cross section in the shape of one or several of circular, oval, rectangular, polygonal, A-shaped, B-shaped, D-shaped, M-shaped, N-shaped, O-shaped, S-shaped, E-shaped, F-shaped, H-shaped, K-shaped, L-shaped, T-shaped, U-shaped, V-shaped, W-shaped, X-shaped, Y-shaped, Z-shaped, P-shaped, semi-arc, arc, and waved shape.

5. The connector assembly according to claim 1, **characterized in that**, part of the electrical connection skeleton is flexible.

6. The connector assembly according to claim 1, **characterized in that**, the electrical connection skeleton includes at least one bending portion.

7. The connector assembly according to claim 1, **characterized in that**, the cross-section shape of the electrical connection skeleton is polygon, and the corners of the polygon are all chamfered or rounded.

8. The connector assembly according to claim 1, **characterized in that**, a cross sectional area of the electrical connection skeleton is 3.5 mm² to 240 mm².

9. The connector assembly according to claim 1, **characterized in that**, the material of the outer shell or the insulation layer contains one or several of tetraphenyl ethylene, polyvinyl chloride, polyethylene, polyamide, polytetrafluoroethylene, tetrafluoroethylene/hexafluoroethylene copolymer, ethylene/tetrafluoroethylene copolymer, polypropylene, polyvinylidene fluoride, polyurethane, polyterephthalic acid, polyurethane elastomers, styrene block copolymer, perfluoroalkoxy alkane, chlorinated polyethylene, polyphenylene sulfide, polystyrene, crosslinked polyolefin, EPR (ethylene propylene rubber), Ethylene/vinyl acetate copolymer, neoprene rubber, natural rubber, styrene butadiene rubber, nitrile butadiene rubber, silicone rubber, butadiene rubber, isoamyl rubber, ethylene propylene rubber, butyl rubber, fluorine rubber, polyurethane rubber, polyacrylate rubber, chlorosulfonated polyethylene rubber, chloroether rubber, chlorinated polyethylene rubber, chloro-sulfide rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, polyformaldehyde resin.

10. The connector assembly according to claim 1, **characterized in that**, the conductive plastic is a high molecular material containing conductive particles; the material of the conductive particles contains one or several of metal, conductive ceramics, a carbon-containing conductor, a solid electrolyte, and a mixed conductor; the material of the high molecular material contains one or several of tetraphenyl ethylene, polyvinyl chloride, polyethylene, polyamide, polytetrafluoroethylene, tetrafluoroethylene/hexafluoroethylene copolymer, ethylene/tetrafluoroethylene copolymer, polypropylene, polyvinylidene fluoride, polyurethane, polyterephthalic acid, polyurethane elastomers, styrene block copolymer, perfluoroalkoxy alkane, chlorinated polyethylene, polyphenylene sulfide, polystyrene, crosslinked polyolefin, EPR (ethylene propylene rubber), Ethylene/vinyl acetate copolymer, neoprene rubber, natural rubber, styrene butadiene rubber, nitrile butadiene rubber, silicone rubber, butadiene rubber, isoamyl rubber, ethylene propylene rubber, butyl rubber, fluorine rubber, polyurethane rubber, polyacrylate rubber, chlorosulfonated polyethylene rubber, chloroether rubber, chlorinated polyethylene rubber, chloro-sulfide rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, polyformaldehyde resin.

11. The connector assembly according to claim 10, **characterized in that**, a volume proportion of the conductive particles in the conductive plastic is between 3% to 95%.

12. The connector assembly according to claim 10, **characterized in that**, the material of the metal contains one or several of gold, silver, copper, nickel, titanium, tin, aluminum, cadmium, zirconium, chromium, cobalt, manganese, zinc, phosphorus, tellurium, beryllium, tin-lead alloy, silver-antimony alloy, palladium, palladium-nickel alloy or silver-gold-zirconium alloy.

13. The connector assembly according to claim 10, **characterized in that**, the carbon-containing conductor contains one or more of graphite powder, carbon nanotube material, graphene material, graphite silver or graphene silver.

14. The connector assembly using a new shielding material according to claim 1, **characterized in that**, the inner shell is electrically connected to the shielding layer by means of conductive adhesive bonding or welding or screw connection or crimping or clamping.

15. The connector assembly according to claim 1, **characterized in that**, the conductivity of the inner shell is greater than or equal to 4.8×10⁶ S/m.

16. The connector assembly according to claim 1, **characterized in that**, an impedance between the shielding layer and the inner shell is less than 80 mΩ.

17. The connector assembly according to claim 1, **characterized in that**, a transfer impedance of the shielding layer is less than 100 mΩ.

18. The connector assembly according to claim 1, **characterized in that**, a transfer impedance of the inner shell is less than 100 mΩ.

19. The connector assembly according to claim 1, **characterized in that**, an outer insulation layer further sleeves outer periphery of the shielding layer, and the outer insulation layer and the outer shell are partially connected.

20. The connector assembly according to claim 1, **characterized in that**, one of the connectors is a charging socket.

21. A processing method of a connector assembly, for producing the connector assembly according to any of claims 1 to 20, **characterized in that**, the processing method comprises:
a step S01: stripping part of an outer insulation layer, a shielding layer and an insulation layer successively at the ends of an electrical connection skeleton after cutting off the electrical connection skeleton at a fixed length;
a step S02: preparing a connection terminal by forging, stamping, extrusion or machining;
a step S03: electrically connecting the electrical connection skeleton to the connection terminal by welding to form a welding semi-finished product;
a step S04: preparing a two-color forming machine and pouring raw materials of an outer shell and an inner shell into a material cylinder of the two-color forming machine;
a step S05: placing the welding semi-finished product in a forming die of the forming machine;
a step S06: opening the two-color forming machine, and injecting the inner shell and the outer shell on part of the connection terminal and part of the electrical connection skeleton successively from inside to outside.

22. The processing method of a connector assembly according to claim 21, **characterized in that**, the conductive plastic is processed by a processing method comprising:
a step S11: preparing raw materials of the conductive particles and processing the raw materials into the conductive particles by crushing;
a step S12: preparing a mixing machine, and mixing the conductive particles and a high molecular material evenly in the plastic mixing machine to form a mixed conductive plastic;
a step S13: preparing a granulator and processing the mixed conductive plastic into the conductive particles.
